# EUROPEAN PATENT APPLICATION

(11) **EP 4 757 130 A1**
(43) Date of publication of application: **10.06.2026**
(21) Application number: 25221338.4
(22) Date of filing: 08.12.2025
(51) Int. Cl.: H02K 3/24, H02K 3/38, H02K 9/197, H02K 3/34

(54) **ELECTRIC MACHINE**

(30) Priority: 09.12.2024 US 202463729544 P
(71) Applicant: BorgWarner Inc., Auburn Hills, MI 48326 (US)
(72) Inventor: MAYER, Andreas WP, Clarkston, MI, 48346 (US); ISHIHARA, Mitsuru, Rochester Hills, MI, 48304 (US); BOURN, James, Oxford, MI, 48371 (US); DIKO, Andi, Auburn Hills, MI, 48326 (US)
(74) Representative: Peterreins Schley

(57) **Abstract**

An electric machine includes a first cooling channel encapsulating first end windings, a second cooling channel encapsulating second end windings, a first supply path, and a second supply path. The electric machine includes a first outlet path configured to receive fluid from a first outlet fluidly coupled to the first cooling channel and a first outlet path, and a second outlet path configured to receive fluid from a second outlet fluidly coupled to the second cooling channel and a second outlet path. The first supply path is fluidly separate from the second supply path. The first cooling channel is configured such that, when the fluid is pressurized, the fluid flows from a first lower cooling portion to a first upper cooling portion and such that, when the fluid is not pressurized, the fluid does not flow from the first lower cooling portion to the first upper cooling portion.

## Description

### CROSS-REFERENCE TO RELATED APPLICATIONS

The present application claims priority to and all the benefits of U.S. Provisional Patent Application No. 63/729,544 filed December 9, 2024, which is hereby expressly incorporated herein by reference in its entirety.

### BACKGROUND OF THE DISCLOSURE

### 1. Field of the Disclosure

The subject disclosure relates to the field of electric machines and, in particular, electric machines for use in a drive module assembly.

### 2. Description of the Related Art

Conventional drive module assemblies include an electric machine configured to deliver rotational torque to wheels of a vehicle. To help deliver rotational torque to wheels of a vehicle, conventional drive module assemblies include gears and a differential to ultimately deliver the rotational torque from the electric machine to wheels of the vehicle to allow the vehicle to maneuver.

As hybrid vehicles and battery electric vehicles become more prevalent, the need for efficient and reliable drive module assemblies has become increasingly important. One of the main challenges in designing drive module assemblies for hybrid vehicles and battery electric vehicles is achieving high efficiency while maintaining a compact size and low weight. Hybrid vehicles and battery electric vehicles often have limited space available for the drive module assembly, and any added weight can reduce the vehicle's range and performance.

In recent years, advances in electric motor technology and power electronics have led to the development of more compact and efficient drive module assemblies. Additionally, advances in electric motor technology have increased the power output and rotational speed of various electric motors, which results in increased heat produced by the electric motors. To this end, there have been challenges with adequately cooling the electric motors. Therefore, there still remains a need for an electric machine with improved cooling capabilities, all while having improved efficiency and increased performance while addressing the deficiencies set forth above.

### SUMMARY OF THE INVENTION

An electric machine includes a machine housing defining a machine housing interior. The electric machine includes a stator disposed in the machine housing interior and extending along a stator axis. The stator includes a stator core defining a stator core interior and a plurality of windings disposed in the stator core interior. The plurality of windings has first end windings extending outside of the stator core interior in a first direction along the stator axis and second end windings extending outside of the stator core interior in a second direction along the stator axis opposite the first direction. The electric machine further includes an internal core surrounding the plurality of windings within the stator core interior. The internal core and the machine housing at least partially define a first cooling channel encapsulating the first end windings and a second cooling channel for encapsulating the second end windings. The electric machine also includes a first supply path configured to direct fluid to the first cooling channel through a first supply inlet, and a second supply path configured to direct fluid to the second cooling channel through a second supply inlet. The first supply inlet is fluidly coupled to the first supply path and the first cooling channel, and the second supply inlet is fluidly coupled to the second supply path and the second cooling channel. The electric machine includes a first outlet path configured to receive fluid from the first cooling channel from a first outlet. The first outlet is fluidly coupled to the first cooling channel and the first outlet path. The electric machine also includes a second outlet path configured to receive fluid from the second cooling channel from a second outlet. The second outlet is fluidly coupled to the second cooling channel and the second outlet path. The first supply path is fluidly separate from the second supply path such that the first fluid supply path independently supplies fluid to the first cooling channel and the second fluid supply path independently supplies fluid to the second cooling channel. The first cooling channel includes a first lower cooling portion adjacent the first supply inlet and a first upper cooling portion adjacent the first outlet. The first cooling channel is configured such that, when the fluid is pressurized, the fluid flows from the first lower cooling portion to the first upper cooling portion and such that, when the fluid is not pressurized, the fluid does not flow from the first lower cooling portion to the first upper cooling portion.

### BRIEF DESCRIPTION OF THE DRAWINGS

Other advantages of the present invention will be readily appreciated, as the same becomes better understood by reference to the following detailed description when considered in connection with the accompanying drawings.
FIG. 1 is a perspective view of an electric machine including machine housing, a stator, a rotor, and an internal core.
FIG. 2 is a perspective view of the stator and the internal core.
FIG. 3 is a cross-sectional view of the stator including a plurality of windings, and the internal core.

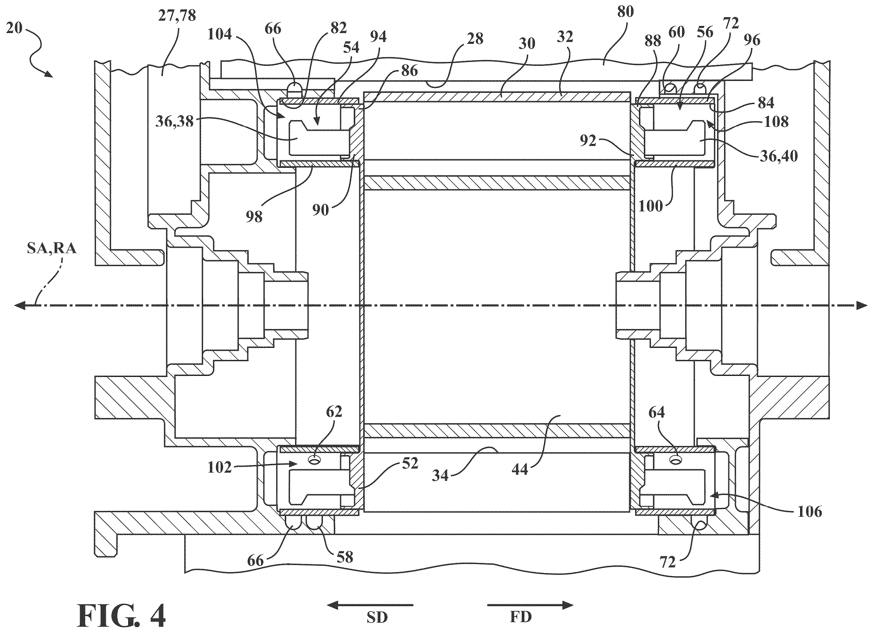

FIG. 4 is a cross-sectional view of the electric machine including a first outer insert disposed about the stator axis and engaged with the internal core, a second outer insert disposed about the stator axis and engaged with the internal core, a first inner insert disposed about the stator axis and disposed between the first outer insert and the stator axis with first inner insert being engaged with the internal core, and a second inner insert disposed about the stator axis and disposed between the second outer insert and the stator axis with the second inner insert being engaged with the internal core
FIG. 5 is a side cross-sectional view of the electric machine, with the electric machine including a first supply path and first supply inlet.
FIG. 6 is a side cross-sectional view of the electric machine, with the electric machine including a first outlet path and a first outlet.
FIG. 7 is a cross-sectional view of a drive module assembly including the electric machine and a geartrain.

### DETAILED DESCRIPTION OF THE INVENTION

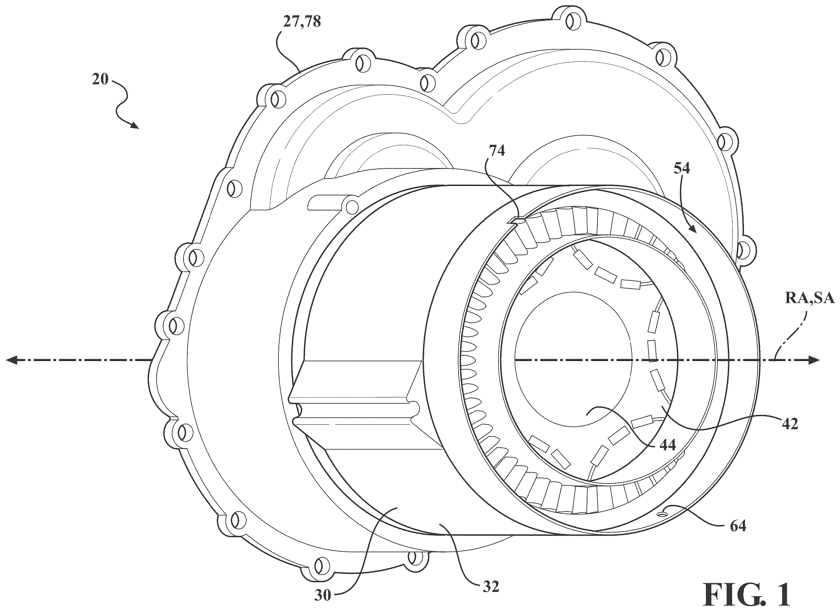

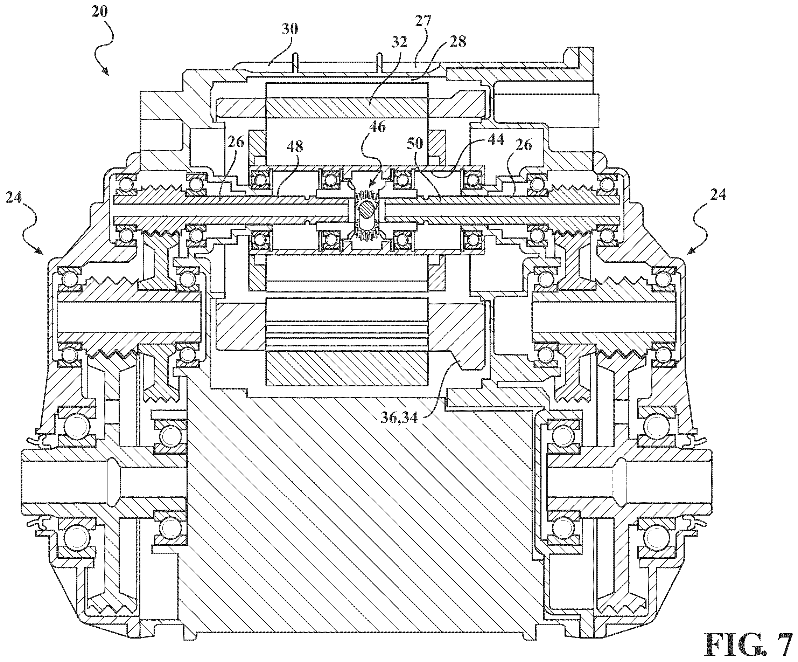

With reference to the Figures, wherein like numerals indicate like parts throughout the several views, an electric machine 20 is generally shown in FIG. 1. The electric machine 20 may be used in a drive module assembly 22, as shown in FIG. 7, with the drive module assembly 22 including the electric machine 20 and a geartrain 24 rotatably coupled to an output 26 of the electric machine 20. The electric machine 20 is configured to deliver rotational torque to wheels of a vehicle through the geartrain 24. The vehicle may include an internal combustion engine and, therefore, be a hybrid vehicle. The vehicle may also be a battery electric vehicle that is free of an internal combustion engine. It is to be appreciated that the vehicle may include one or more of the drive module assemblies 22, such as two drive module assemblies.

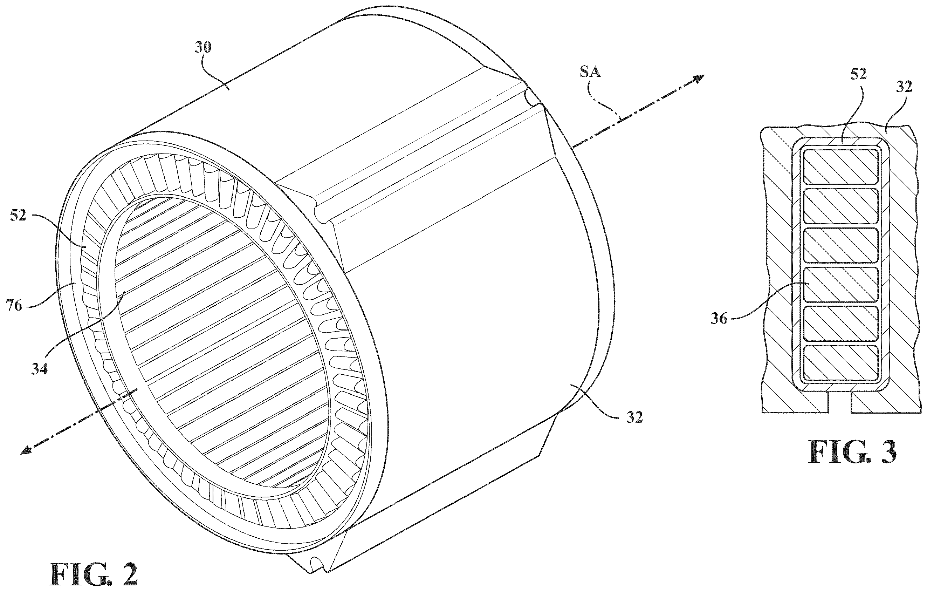

With reference to FIGS. 1 and 4, the electric machine 20 includes a machine housing 27 defining a machine housing interior 28. The electric machine 20 also includes a stator 30 disposed in the machine housing interior 28 and extending along a stator axis SA. As shown in FIGS. 1-4, the stator 30 includes a stator core 32 defining a stator core interior 34 and a plurality of windings 36 disposed in the stator core interior 34. The stator core 32 may be a plurality of stator laminations. The plurality of windings 36 has first end windings 38 extending outside of the stator core interior 34 in a first direction FD along the stator axis SA and second end windings 40 extending outside of the stator core interior 34 in a second direction SD along the stator axis SA opposite the first direction FD.

With particular reference to FIGS. 1 and 4, the electric machine 20 also includes a rotor 42 disposed in the stator core interior 34 and extending along a rotor axis RA. The rotor 42 may define a rotor interior 44 disposed about the rotor axis RA. The electric machine 20 may include a differential 46, as shown in FIG. 7, disposed in the rotor interior 44 and rotatably coupled to the rotor 42. The electric machine 20 may include a first input shaft 48 rotatably coupled to the differential 46, and a second input shaft 50 rotatably coupled to the differential 46.

With reference again to FIGS. 1-4, the electric machine 20 includes an internal core 52 surrounding the plurality of windings within the stator core interior 34. The internal core 52 may be further defined as an overmolded core. When present, the overmolded core comprises an overmolded material. The overmolded material may include high temperature plastic, thermoset, polyphenylene sulfide (PPS), thermoplastic, thermotransfer material, and the like, and may be formed through an injection molding process. The internal core 52 may encapsulate each winding of the plurality of windings 36 along the stator axis SA. The internal core 52 may be engaged with each winding of the plurality of windings 36.

As shown in FIG. 4, the internal core 52 and the machine housing 27 at least partially define a first cooling channel 54 encapsulating the first end windings 38 and a second cooling channel 56 for encapsulating the second end windings 40. With reference to FIGS. 1-4, the internal core 52 may be in direct contact with the plurality of windings 36 within the stator core interior 34 such that the stator 30 is free of a fluid path fluidly coupling the first cooling channel 54 and the second cooling channel 56. Alternatively, or additionally, the internal core 52 and the plurality of windings 36 may define a barrier surface 76 perpendicular to stator axis SA with the barrier surface 76 being continuous within the stator core interior 34 such that the stator 30 is free of a fluid path fluidly coupling the first cooling channel 54 and the second cooling channel 56. The stator 30 may be free of insulation paper between the plurality of windings of the stator 30, particularly in embodiments as set forth above where the internal core 52 is in direct contact with the plurality of windings 36 within the stator core interior 34, and/or when the internal core 52 and the plurality of windings 36 define the barrier surface 76 being continuous within the stator core interior 34 such that the stator 30 is free of a fluid path fluidly coupling the first cooling channel 54 and the second cooling channel 56.

The electric machine 20 includes a first supply path 58 configured to direct fluid to the first cooling channel 54 through a first supply inlet 62, and a second supply path 60 configured to direct fluid to the second cooling channel 56 through a second supply inlet 64. The first supply inlet 62 is fluidly coupled to the first supply path 58 and the first cooling channel 54, and the second supply inlet 64 is fluidly coupled to the second supply path 60 and the second cooling channel 56. Typically, the internal core 52 is disposed between the first and second supply inlets 62, 64 such that the internal core 52 fluidly separates the first and second supply paths 58, 60. The electric machine 20 further includes a first outlet path 66 configured to receive fluid from the first cooling channel 54 from a first outlet 68. The first outlet 68 is fluidly coupled to the first cooling channel 54 and the first outlet path 66. The electric machine 20 also includes a second outlet path 72 configured to receive fluid from the second cooling channel 56 from a second outlet 74. The second outlet 74 is fluidly coupled to the second cooling channel 56 and the second outlet path 72. The first outlet path 66 may be configured to direct fluid from the first cooling channel 54 through the first outlet 68 to a sump 70, and the second outlet path 72 may be configured to direct fluid from the second cooling channel 56 through the second outlet 74 to the sump 70.

In one embodiment, the first and second cooling channels 54, 56 are fluidly separate from one another. In other words, fluid from the first cooling channel 54 is unable to enter the second cooling channel 56, and fluid from the second cooling channel 56 is unable to enter the first cooling channel 54. It is to be appreciated that fluid from the first cooling channel 54 and second cooling channel 56 may both enter into a single sump, or that the fluid from the first cooling channel 54 may enter into a first sump and that the fluid from the second cooling channel 56 may enter into a second sump. In either embodiment, after the fluid leaves the sump, the fluid that enters the first supply path 58 remains separate from the fluid that enters the second supply path 60 and, therefore, the first and second cooling channels 54, 56 are fluidly separate from one another.

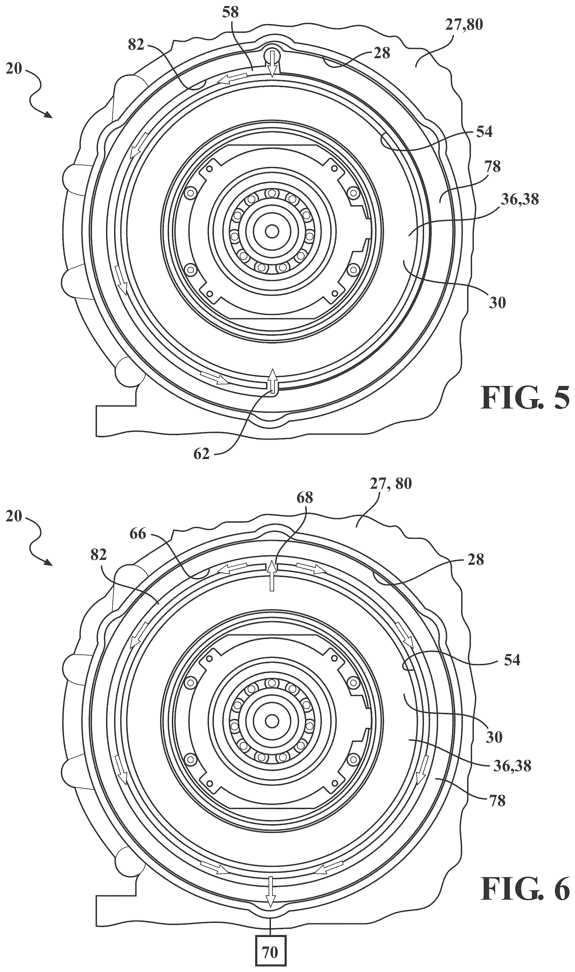

The first supply path 58 may spiral about the stator axis SA and the second supply path 60 may spiral about the stator axis SA, as best shown in FIGS. 5 and 6. It is to be appreciated that the first supply path 58 and second supply path 60 may spiral about the stator axis SA with a pitch angle of zero, and any pitch angle greater than zero.

The first supply path 58 is fluidly separate from the second supply path 60 such that the first supply path 58 independently supplies fluid to the first cooling channel 54 and the second supply path 60 independently supplies fluid to the second cooling channel 56. The first cooling channel 54 includes a first lower cooling portion 102 adjacent the first supply inlet 62 and a first upper cooling portion 104 adjacent the first outlet 68. The first cooling channel 54 is configured such that, when the fluid is pressurized, the fluid flows from the first lower cooling portion 102 to the first upper cooling portion 104 and such that, when the fluid is not pressurized, the fluid does not flow from the first lower cooling portion 102 to the first upper cooling portion 104.

Having the first supply path 58 being fluidly separate from the second supply path 60 such that the first supply path 58 independently supplies fluid to the first cooling channel 54 and the second supply path 60 independently supplies fluid to the second cooling channel 56 offers several advantages. First, the size of any pumps supplying fluid to the first and second cooling channels 64, 56 may be reduced in size. Second, the first and second supply paths 58, 60 may be reduced in size and complexity for delivering fluid to the first and second cooling channels 54, 56. Additionally, having the first cooling channel 54 being configured such that, when the fluid is pressurized, the fluid flows from the first lower cooling portion 102 to the first upper cooling portion 104 and such that, when the fluid is not pressurized, the fluid does not flow from the first lower cooling portion 102 to the first upper cooling portion 104 allows for better cooling of the first end windings 38, the plurality of windings 36, and the stator 30 in general. It is to be appreciated that when the fluid is pressurized, this includes when a pump is pressurizing the fluid and when the fluid is syphoned from the first lower cooling portion 102 to the first upper cooling portion 104 due to pressure caused by hot temperature of the fluid. In one example, the first lower cooling portion 102 is configured to be under the first upper cooling portion 104 with respect to the ground. In other words, gravity may or may not force fluid to flow from the first upper cooling portion 104 to the first lower cooling portion 102, depending on the temperature of the fluid, whether a check valve is present in the first lower cooling portion 102, and/or whether a gear pump or centrifugal pump is used. However, when the fluid is pressurized and flows from the first supply inlet 62 to the first outlet 68, fluid flows upward against gravity from the first lower cooling portion 102 to the first upper cooling portion 104. This ensures that the fluid is evenly distributed throughout the first cooling channel 54 such that the cooler fluid in the first lower cooling portion 102 and absorbs heat from the stator 30 as the fluid moves into the first upper cooling portion 104. To this end, fluid in the first upper cooling portion 104 is typically hotter than the fluid in the first lower cooling portion 102. Additionally, fluid flowing from the first outlet 68 flows into the first outlet path 66, which further cools the stator 30 as the fluid flows over components of the stator 30 and into the sump 70.

In one embodiment, the second cooling channel 56 includes a second lower cooling portion 106 adjacent the second supply inlet 64 and a second upper cooling portion 108 adjacent the second outlet 74. The second cooling channel 56 is configured such that, when the fluid is pressurized, the fluid flows from the second lower cooling portion 106 to the second upper cooling portion 108 and such that, when the fluid is not pressurized, the fluid does not flow from the second lower cooling portion 106 to the second upper cooling portion 108. It is to be appreciated that when the fluid is pressurized, this includes when a pump is pressurizing the fluid and when the fluid is syphoned from the second lower cooling portion 106 to the second upper cooling portion 108 due to pressure caused by hot temperature of the fluid. Having the second cooling channel 56 being configured such that, when the fluid is pressurized, the fluid flows from the second lower cooling portion 106 to the second upper cooling portion 108 and such that, when the fluid is not pressurized, the fluid does not flow from the second lower cooling portion 106 to the second upper cooling portion 108allows for better cooling of the second end windings 40, the plurality of windings 36, and the stator 30 in general. In one example, the second lower cooling portion 106 is configured to be under the second upper cooling portion 108 with respect to the ground. In other words, gravity may or may not force fluid to flow from the second upper cooling portion 108 to the second lower cooling portion 106, depending on the temperature of the fluid, whether a check valve is present in the second lower cooling portion 106, and/or whether a gear pump or centrifugal pump is used. However, when the fluid is pressurized and flows from the second supply inlet 62 to the second outlet 74, fluid flows upward against gravity from the second lower cooling portion 106 to the second upper cooling portion 108. This ensures that the fluid is evenly distributed throughout the second cooling channel 56 such that the cooler fluid in the second lower cooling portion 106 and absorbs heat from the stator 30 as the fluid moves into the second upper cooling portion 108. To this end, fluid in the second upper cooling portion 108 is hotter than the fluid in the second lower cooling portion 106. Additionally, fluid flowing from the second outlet 74 flows into the second outlet path 72, which further cools the stator 30 as the fluid flows over components of the stator 30 and into the sump 70.

In another embodiment, the second cooling channel 56 is configured such that, when the fluid is pressurized, the fluid flows from the second upper cooling portion 108 to the second lower cooling portion 106 and such that, when fluid is not pressurized, the fluid flows from the second upper cooling portion 108 to the second lower cooling portion 106. Having the second cooling channel 56 being configured such that, when the fluid is pressurized, the fluid flows from the second upper cooling portion 108 to the second lower cooling portion 106 such that, when the fluid is not pressurized, the fluid flows from the second upper cooling portion 108 to the second lower cooling portion 106 allows for better cooling of the second end windings 40, the plurality of windings 36, and the stator 30 in general. In one example, the second lower cooling portion 106 is configured to be under the second upper cooling portion 108 with respect to the ground. In other words, gravity may or may not force fluid to flow from the second upper cooling portion 108 to the second lower cooling portion 106, depending on the temperature of the fluid, whether a check valve is present in the second lower cooling portion 106, and/or whether a gear pump or centrifugal pump is used. Similarly, when the fluid is pressurized and flows from the second supply inlet 62 to the second outlet 74, fluid flows downward from the second upper cooling portion 108 to second lower cooling portion 106. This ensures that the fluid is evenly distributed throughout the second cooling channel 56 such that the cooler fluid in the second upper cooling portion 108 absorbs heat from the stator 30 as the fluid moves into the second lower cooling portion 106. To this end, fluid in the second lower cooling portion 106 is hotter than the fluid in the second upper cooling portion 108.

In another embodiment, to help evenly remove heat from the stator 30, fluid flow in the first and second cooling channels 54, 56 may flow counter to one another. In other words, when the fluid in the first cooling channel 54 is pressurized and the fluid in the second cooling channel 56 is pressurized, the first cooling channel 54 is configured such that the fluid in the first cooling channel 54 flows from the first supply inlet 62 to the first outlet 68 in a first fluid direction (e.g., upward against gravity), and the second cooling channel 56 is configured such that the fluid in the second cooling channel flows 56 from the second supply inlet 64 to the second outlet 74 in a second fluid direction opposite (e.g., downward with gravity) the first fluid direction. For example, the first supply inlet 62 and the second supply inlet 64 may offset from one another with respect to the stator axis SA. Additionally, or alternatively, the first outlet 68 and the second outlet 74 may be offset from one another with respect to the stator axis SA. It is to be appreciated that the first supply inlet 62 and the second supply inlet 64 may offset from one another with respect to the stator axis SA by 45 degrees, 90 degrees, 135 degrees, or 180 degrees. It is also to be appreciated that the first outlet 68 and the second outlet 74 may be offset from one another with respect to the stator axis SA by 45 degrees, 90 degrees, 135 degrees, or 180 degrees. Having the counter flow of the fluid through the first and second cooling channels 54, 56 to have the cooler fluid in the first lower cooling portion 102 and the hotter fluid in the first upper cooling portion 104, and the cooler fluid in the second upper cooling portion 108 and the hotter fluid in the second lower cooling portion 106 allows more even removal of heat from the stator 30 because cooler fluid is introduced at opposite ends of the stator 30.

The machine housing 27 may be further defined as a first machine housing 78 and a second machine housing 80 coupled to the first machine housing 78, as shown in FIGS. 4 and 7. The first machine housing 78 may be at least partially nested within the second machine housing 80. As shown in FIG. 1, the second machine housing 80 is removed to show the stator 30, the internal core 52, and the rotor 42. When present, the first machine housing 78 at least partially defines the first cooling channel 54 with the internal core 52, and the second machine housing 80 at least partially defines the second cooling channel 56 with the internal core 52. In one embodiment, the first supply path 58 is defined by the first machine housing 78, and the second supply path 60 is defined by the second machine housing 80. In such embodiments, the first machine housing 78 may have a first inner housing surface 82 facing the stator axis SA, the second machine housing 80 may have a second inner housing surface 84 facing the stator axis SA, and the first supply path 58 may be defined by the first inner housing surface 82 and the second supply path 60 may be defined by the second inner housing surface 84. For example, the first supply path 58 may be entirely defined by the first machine housing 78 and the second supply path 60 may be entirely defined by the second machine housing 80. It is contemplated that the first supply path 58 and second supply path 60 may be collectively defined between the first machine housing 78 and the second machine housing 80, respectively, and one or more components, as described below.

As shown in FIG. 4, the internal core 52 may include a first upper portion 86 disposed outside of and extending from the stator core interior 34 in the first direction FD, a second upper portion 88 disposed outside of and extending from the stator core interior 34 in the second direction SD, a first lower portion 90 extending from the stator core interior 34 in the first direction FD and disposed between the first upper portion 86 and the stator axis SA, and a second lower portion 92 extending from the stator core interior 34 in the second direction SD and disposed between the second upper portion 88 and the stator axis SA. The first upper portion 86, second upper portion 88, first lower portion 90, and the second lower portion 92 may be referred to as sealing extrusions.

The electric machine 20 may include a first outer insert 94 disposed about the stator axis SA and engaged with the first upper portion 86, and a second outer insert 96 disposed about the stator axis SA and engaged with the second upper portion 88. The electric machine 20 may also include first inner insert 98 disposed about the stator axis SA and disposed between the first outer insert 94 and the stator axis SA, with the first inner insert 98 being engaged with the first lower portion 90. The electric machine 20 may also include a second inner insert 100 disposed about the stator axis SA and disposed between the second outer insert 96 and the stator axis SA, with the second inner insert 100 being engaged with the first lower portion 90. When present, the first outer insert 94, the first inner insert 98, the first upper portion 86, and the first lower portion 90 collectively define the first cooling channel 54 for encapsulating the first end windings 38, and the second outer insert 96, the second inner insert 100, the second upper portion 88, and the second lower portion 92 collectively define the second cooling channel 56 for encapsulating the second end windings 40. Specifically, the first outer insert 94 is engaged with the first upper portion 86 to form a seal, the second outer insert 96 is engaged with the second upper portion 88 to form a seal, the first lower portion 90 is engaged with the first inner insert 98 to form a seal, and the second lower portion 92 is engaged with the second inner insert 100 to form a seal. Additionally, when present, the first outer insert 94, the first inner insert 98, the first upper portion 86, the first lower portion 90, the first machine housing 78, and the internal core 52 collectively define the first cooling channel 54 for encapsulating the first end windings 38, and the second outer insert 96, the second inner insert 100, the second upper portion 88, the second lower portion 92, the second machine housing 80, and the internal core 52 collectively define the second cooling channel 56 for encapsulating the second end windings 40. When the first cooling channel 54 is defined as described above, the only source of fluid into and out of the first cooling channel 54 is typically through only the first supply path 58 and the first outlet path 66, respectively. Similarly, when the second cooling channel 54 is defined as described above, the only source of fluid into and out of the second cooling channel 56 is typically through only the second supply path 60 and the second outlet path 72, respectively.

It is to be appreciated that the first outer insert 94 and the first inner insert 98 may be integral with one another. Similarly, the second outer insert 96 and the second inner insert 100 may be integral with one another. Alternatively, the first outer insert 94 and the first inner insert 98 may be separate components from one another. Similarly, the second outer insert 96 and the second inner insert 100 are separate components from one another.

The first machine housing 78 may be engaged with the first outer insert 94 and the first inner insert 98 to further collectively define the first cooling channel 54, and the second machine housing 80 may be engaged with the second outer insert 96 and the second inner insert 100 to further collectively define the second cooling channel 56.

The first outer insert 94 may define the first supply inlet 62 and the second outer insert 96 may define the second supply inlet 64. The first outer insert 94 may also define the first outlet 68, and the second outer insert 96 may define the second outlet 74. The first supply inlet 62 and the first outlet 68 may be offset from one another about and with respect to the stator axis SA, and the second supply inlet 64 and the second outlet 74 may be offset from one another about and with respect to the stator axis SA. For example, the first supply inlet 62 may be 180 degrees offset from the first outlet 68 with respect to the stator axis SA.

The first supply path 58 may be defined between the machine housing 27 and the first outer insert 94, and the second supply path 60 may be defined between the machine housing 27 and the second outer insert 96. Similarly, the first outlet path 66 may be defined between the machine housing 27 and the first outer insert 94, and the second outlet path 72 may be defined between the machine housing 27 and the second outer insert 96.

The first supply path 58 and the first outlet path 66 may be axially offset with respect to one another with respect to the stator axis SA. In other words, as shown in FIGS 4-6, the first supply path 58 may be defined exclusively by the first machine housing 78 or by the first machine housing 78 and the first outer insert 94, and, similarly, the first outlet path 66 may be defined exclusively by the first machine housing 78 or by the first machine housing 78 and the first outer insert 94, with the first supply path 58 and the first outlet path 66 being axially offset from one another. Additionally, as shown in FIG. 5, the first supply path 58 is shown as being defined 180 degrees about the stator axis SA, and the first outlet path 66 is shown as being defined 360 degrees about the stator axis SA. To accommodate both the first supply path 58 and the first outlet path 66, the first supply path 58 and the first outlet path 66 are axially offset from one another. It is to be appreciated, that while not shown explicitly in the FIGS., the same as described above equally applies to the second supply path 60 and the second outlet path 72.

Embodiment 1: An electric machine comprising:
a machine housing defining a machine housing interior;
a stator disposed in said machine housing interior and extending along a stator axis, wherein said stator comprises a stator core defining a stator core interior and a plurality of windings disposed in said stator core interior, and wherein said plurality of windings has first end windings extending outside of said stator core interior in a first direction along said stator axis and second end windings extending outside of said stator core interior in a second direction along said stator axis opposite said first direction;
an internal core surrounding said plurality of windings within said stator core interior, wherein said internal core and said machine housing at least partially define a first cooling channel encapsulating said first end windings and a second cooling channel for encapsulating said second end windings;
a first supply path configured to direct fluid to said first cooling channel through a first supply inlet, wherein said first supply inlet is fluidly coupled to said first supply path and said first cooling channel;
a second supply path configured to direct fluid to said second cooling channel through a second supply inlet, wherein said second supply inlet is fluidly coupled to said second supply path and said second cooling channel;
a first outlet path configured to receive fluid from said first cooling channel from a first outlet, wherein said first outlet is fluidly coupled to said first cooling channel and said first outlet path; and
a second outlet path configured to receive fluid from said second cooling channel from a second outlet, wherein said second outlet is fluidly coupled to said second cooling channel and said second outlet path;
wherein said first supply path is fluidly separate from said second supply path such that said first supply path independently supplies fluid to said first cooling channel and said second supply path independently supplies fluid to said second cooling channel; and
wherein said first cooling channel comprises a first lower cooling portion adjacent said first supply inlet and a first upper cooling portion adjacent said first outlet, wherein said first cooling channel is configured such that, when the fluid is pressurized, the fluid flows from said first lower cooling portion to said first upper cooling portion and such that, when the fluid is not pressurized, the fluid does not flow from said first lower cooling portion to said first upper cooling portion

Embodiment 2: The electric machine as set forth in embodiment 1, wherein said internal core is in direct contact with said plurality of windings within said stator core interior such that the stator is free of a fluid path fluidly coupling said first cooling channel and said second cooling channel.

Embodiment 3: The electric machine as set forth in any one of the preceding embodiments, wherein said internal core and said plurality of windings define a barrier surface perpendicular to said stator axis, and wherein said barrier surface is continuous within said stator core interior such that the stator is free of a fluid path fluidly coupling said first cooling channel and said second cooling channel.

Embodiment 4: The electric machine as set forth in any one of the preceding embodiments, wherein said machine housing is further defined as a first machine housing and a second machine housing coupled to said first machine housing, wherein said first machine housing at least partially defines said first cooling channel with said internal core, and wherein said second machine housing at least partially defines said second cooling channel with said internal core.

Embodiment 5: The electric machine as set forth in embodiment 4, wherein said first supply path is defined by said first machine housing, and said second supply path is defined by said second machine housing.

Embodiment 6: The electric machine as set forth in embodiment 5, wherein said first machine housing has a first inner housing surface facing said stator axis, wherein said second machine housing has a second inner housing surface facing said stator axis, and wherein said first supply path is defined by said first inner housing surface and said second supply path is defined by said second inner housing surface.

Embodiment 7: The electric machine as set forth in any one of the preceding embodiments, wherein said internal core comprises,
a first upper portion disposed outside of and extending from said stator core interior in said first direction,
a second upper portion disposed outside of and extending from said stator core interior in said second direction,
a first lower portion extending from said stator core interior in said first direction and disposed between said first upper portion and said stator axis, and
a second lower portion extending from said stator core interior in said second direction and disposed between said second upper portion and said stator axis.

Embodiment 8: The electric machine as set forth in embodiment 7 further comprising,
a first outer insert disposed about said stator axis and engaged with said first upper portion,
a second outer insert disposed about said stator axis and engaged with said second upper portion,
a first inner insert disposed about said stator axis and disposed between said first outer insert and said stator axis, wherein said first inner insert is engaged with said first lower portion, and
a second inner insert disposed about said stator axis and disposed between said second outer insert and said stator axis, wherein said second inner insert is engaged with said first lower portion;
wherein said first outer insert, said first inner insert, said first upper portion, and said first lower portion collectively define said first cooling channel for encapsulating said first end windings; and
wherein said second outer insert, said second inner insert, said second upper portion, and said second lower portion collectively define said second cooling channel for encapsulating said second end windings.

Embodiment 9: The electric machine as set forth in embodiment 8, wherein said first outer insert and said first inner insert are integral with one another, and wherein said second outer insert and said second inner insert are integral with one another.

Embodiment 10: The electric machine as set forth in embodiment 8, wherein said first outer insert and said first inner insert are separate components from one another, and wherein said second outer insert and said second inner insert are separate components from one another.

Embodiment 11: The electric machine as set forth in any one of embodiments 8-10, wherein said first machine housing is engaged with said first outer insert and said first inner insert to further collectively define said first cooling channel, and wherein said second machine housing is engaged with said second outer insert and said second inner insert to further collectively define said second cooling channel.

Embodiment 12: The electric machine as set forth in any one of the preceding embodiments, wherein said stator is free of insulation paper between said plurality of windings of said stator.

Embodiment 13: The electric machine as set forth in any one of embodiments 8-12, wherein said first outer insert defines said first supply inlet and wherein said second outer insert defines said second supply inlet.

Embodiment 14: The electric machine as set forth in any one of the preceding embodiments said first outlet path configured to direct fluid from said first cooling channel through said first outlet to a sump, and said second outlet path configured to direct fluid from said second cooling channel through said second outlet to said sump.

Embodiment 15: The electric machine as set forth in any one of embodiments 8-14, wherein said first outer insert defines said first outlet, and wherein said second outer insert defines said second outlet.

Embodiment 16: The electric machine as set forth in any one of embodiments 14 and 15, wherein said first supply inlet and said first outlet are offset from one another about and with respect to said stator axis, and wherein said second supply inlet and said second outlet are offset from one another about and with respect to said stator axis.

Embodiment 17: The electric machine as set forth in any one of embodiments 8-16, wherein said first supply path is defined between said machine housing and said first outer insert, and wherein said second supply path is defined between said machine housing and said second outer insert.

Embodiment 18: The electric machine as set forth in any one of embodiments 14-17, wherein said first outlet path is defined between said machine housing and said first outer insert, and wherein said second outlet path is defined between said machine housing and said second outer insert.

Embodiment 19: The electric machine as set forth in any one of the preceding embodiments, wherein said first and second cooling channels are fluidly separate from one another.

Embodiment 20: The electric machine as set forth in any one of the preceding embodiments, wherein said internal core is further defined as an overmolded core.

Embodiment 21: The electric machine as set forth in any one of the preceding embodiments, wherein said second cooling channel comprises a second lower cooling portion adjacent said second supply inlet and a second upper cooling portion adjacent said second outlet, wherein said second cooling channel is configured such that, when the fluid is pressurized, the fluid flows from said second lower cooling portion to said second upper cooling portion and such that, when the fluid is not pressurized, the fluid does not flow from said second lower portion to said second upper portion.

Embodiment 22: The electric machine as set forth in any one of embodiments 1-20, wherein said second cooling channel comprises a second lower cooling portion adjacent said second outlet and a second upper cooling portion adjacent said second supply inlet, wherein said second cooling channel is configured such that, when the fluid is pressurized, the fluid flows from said second upper cooling portion to said second lower cooling portion.

Embodiment 23: The electric machine as set forth in embodiment 22, wherein, when the fluid in said first cooling channel is pressurized and the fluid in the second cooling channel is pressurized, said first cooling channel is configured such that the fluid in said first cooling channel flows from said first supply inlet to said first outlet in a first fluid direction, and said second cooling channel is configured such that the fluid in said second cooling channel flows from said second supply inlet to said second outlet in a second fluid direction opposite said first fluid direction.

Embodiment 24: The electric machine as set forth in any one of the preceding embodiments further comprising a rotor disposed in said stator housing interior and extending along a rotor axis.

Embodiment 25: A drive module assembly comprising said electric machine as set forth in any one of the preceding embodiments, and further comprising a geartrain rotatably coupled to an output of said electric machine that is configured to deliver rotational torque to wheels of a vehicle.

## Claims

1. An electric machine comprising:
a machine housing defining a machine housing interior;
a stator disposed in said machine housing interior and extending along a stator axis, wherein said stator comprises a stator core defining a stator core interior and a plurality of windings disposed in said stator core interior, and wherein said plurality of windings has first end windings extending outside of said stator core interior in a first direction along said stator axis and second end windings extending outside of said stator core interior in a second direction along said stator axis opposite said first direction;
an internal core surrounding said plurality of windings within said stator core interior, wherein said internal core and said machine housing at least partially define a first cooling channel encapsulating said first end windings and a second cooling channel encapsulating said second end windings;
a first supply path configured to direct fluid to said first cooling channel through a first supply inlet, wherein said first supply inlet is fluidly coupled to said first supply path and said first cooling channel;
a second supply path configured to direct fluid to said second cooling channel through a second supply inlet, wherein said second supply inlet is fluidly coupled to said second supply path and said second cooling channel;
a first outlet path configured to receive fluid from said first cooling channel from a first outlet, wherein said first outlet is fluidly coupled to said first cooling channel and said first outlet path; and
a second outlet path configured to receive fluid from said second cooling channel from a second outlet, wherein said second outlet is fluidly coupled to said second cooling channel and said second outlet path;
wherein said first supply path is fluidly separate from said second supply path such that said first supply path independently supplies fluid to said first cooling channel and said second supply path independently supplies fluid to said second cooling channel; and
wherein said first cooling channel comprises a first lower cooling portion adjacent said first supply inlet and a first upper cooling portion adjacent said first outlet, wherein said first cooling channel is configured such that, when the fluid is pressurized, the fluid flows from said first lower cooling portion to said first upper cooling portion and such that, when the fluid is not pressurized, the fluid does not flow from said first lower cooling portion to said first upper cooling portion

2. The electric machine as set forth in claim 1, wherein said internal core is in direct contact with said plurality of windings within said stator core interior such that the stator is free of a fluid path fluidly coupling said first cooling channel and said second cooling channel.

3. The electric machine as set forth in any one of the preceding claims, wherein said internal core and said plurality of windings define a barrier surface perpendicular to said stator axis, and wherein said barrier surface is continuous within said stator core interior such that the stator is free of a fluid path fluidly coupling said first cooling channel and said second cooling channel.

4. The electric machine as set forth in any one of the preceding claims, wherein said internal core comprises,
a first upper portion disposed outside of and extending from said stator core interior in said first direction,
a second upper portion disposed outside of and extending from said stator core interior in said second direction,
a first lower portion extending from said stator core interior in said first direction and disposed between said first upper portion and said stator axis, and
a second lower portion extending from said stator core interior in said second direction and disposed between said second upper portion and said stator axis.

5. The electric machine as set forth in claim 4 further comprising,
a first outer insert disposed about said stator axis and engaged with said first upper portion,
a second outer insert disposed about said stator axis and engaged with said second upper portion,
a first inner insert disposed about said stator axis and disposed between said first outer insert and said stator axis, wherein said first inner insert is engaged with said first lower portion, and
a second inner insert disposed about said stator axis and disposed between said second outer insert and said stator axis, wherein said second inner insert is engaged with said first lower portion;
wherein said first outer insert, said first inner insert, said first upper portion, and said first lower portion collectively define said first cooling channel for encapsulating said first end windings; and
wherein said second outer insert, said second inner insert, said second upper portion, and said second lower portion collectively define said second cooling channel for encapsulating said second end windings.

6. The electric machine as set forth in claim 5, wherein said first outer insert and said first inner insert are integral with one another, and wherein said second outer insert and said second inner insert are integral with one another.

7. The electric machine as set forth in claim 5, wherein said first outer insert and said first inner insert are separate components from one another, and wherein said second outer insert and said second inner insert are separate components from one another.

8. The electric machine as set forth in any one of the preceding claims said first outlet path configured to direct fluid from said first cooling channel through said first outlet to a sump, and said second outlet path configured to direct fluid from said second cooling channel through said second outlet to said sump.

9. The electric machine as set forth in any one of the preceding claims, wherein said first and second cooling channels are fluidly separate from one another.

10. The electric machine as set forth in any one of the preceding claims, wherein said internal core is further defined as an overmolded core.

11. The electric machine as set forth in any one of the preceding claims, wherein said second cooling channel comprises a second lower cooling portion adjacent said second supply inlet and a second upper cooling portion adjacent said second outlet, wherein said second cooling channel is configured such that, when the fluid is pressurized, the fluid flows from said second lower cooling portion to said second upper cooling portion and such that, when the fluid is not pressurized, the fluid does not flow from said second lower portion to said second upper portion.

12. The electric machine as set forth in any one of claims 1-10, wherein said second cooling channel comprises a second lower cooling portion adjacent said second outlet and a second upper cooling portion adjacent said second supply inlet, wherein said second cooling channel is configured such that, when the fluid is pressurized, the fluid flows from said second upper cooling portion to said second lower cooling portion.

13. The electric machine as set forth in claim 11, wherein, when the fluid in said first cooling channel is pressurized and the fluid in the second cooling channel is pressurized, said first cooling channel is configured such that the fluid in said first cooling channel flows from said first supply inlet to said first outlet in a first fluid direction, and said second cooling channel is configured such that the fluid in said second cooling channel flows from said second supply inlet to said second outlet in a second fluid direction opposite said first fluid direction.

14. The electric machine as set forth in any one of the preceding claims further comprising a rotor disposed in said stator housing interior and extending along a rotor axis.

15. A drive module assembly comprising said electric machine as set forth in any one of the preceding claims, and further comprising a geartrain rotatably coupled to an output of said electric machine that is configured to deliver rotational torque to wheels of a vehicle.
